(19) **Europäisches Patentamt / European Patent Office / Office européen des brevets**

(11) **EP 1 388 475 B1**

(12) **FASCICULE DE BREVET EUROPEEN**

(45) Date de publication et mention
de la délivrance du brevet:
**07.11.2007 Bulletin 2007/45**

(51) Int Cl.:
***B60T 8/00*** *(2006.01)*

(21) Numéro de dépôt: **03291968.0**

(22) Date de dépôt: **06.08.2003**

(54) **Procédé de commande de freinage des roues d'un véhicule automobile, dispositif de commande de répartition d'efforts de freinage et véhicule equipé d'un tel dispositif**

Fahrzeugbremssteuerungsverfahren, Vorrichtung zur Bremskraftverteilung und Kraftfahrzeug mit solcher Vorrichtung ausgerüstet

Vehicle braking control method, braking force distribution control system and vehicle equipped with such a system

(84) Etats contractants désignés:
**BE DE FR GB**

(30) Priorité: **06.08.2002 FR 0210012**

(43) Date de publication de la demande:
**11.02.2004 Bulletin 2004/07**

(73) Titulaire: **RENAULT S.A.S.**
**92100 Boulogne Billancourt (FR)**

(72) Inventeurs:
 • **Ferreira, Michel**
 **94000 Creteil (FR)**
 • **Richard, Arnaud**
 **92150 Suresnes (FR)**
 • **Leminoux, Gérald**
 **78980 Breval (FR)**
 • **Vourch, Geraldine**
 **78960 Voisins le Bretonneux (FR)**
 • **Spoormans, Thomas**
 **92100 Boulogne-Billancourt (FR)**

(56) Documents cités:
EP-A- 1 125 809         DE-A- 4 208 581
DE-A- 19 931 345       DE-A- 19 941 482
US-B1- 6 183 048

**Description**

La présente invention a pour objet un véhicule automobile équipé d'un dispositif de commande de répartition des efforts de serrage devant être exercés sur des actionneurs de freinage des roues avant et arrière du véhicule.

L'invention a également pour objet un procédé de commande de freinage des roues d'un véhicule automobile ainsi qu'un dispositif de commande de répartition des efforts de serrage devant être exercés sur des actionneurs de freinage des roues avant et arrière d'un véhicule automobile.

L'invention s'applique au cas d'un véhicule équipé d'un système de freinage de service, pilotable au moyen d'un dispositif électro-hydraulique ou d'un dispositif électro-mécanique. Un tel véhicule est équipé de différents dispositifs de mesure et d'estimation de l'effort de serrage d'actionneurs de freinage agissant sur les roues avant et arrière du véhicule. Ces efforts peuvent être représentés par des pressions avec un dispositif électro-hydraulique ou par des signaux électriques, avec un dispositif électro-mécanique. Le véhicule peut également être équipé d'un système électronique de répartition, du type ABS (anti-blocage système), muni d'un dispositif capteur de vitesse. En phase de freinage, les efforts de freinage sont répartis entre les roues avant et les roues arrière selon une répartition prédéterminée fixe ou selon une répartition instantanée déterminée par le système électronique qui assure la stabilité du véhicule.

Les dispositifs de répartition électronique des efforts de freinage utilisés habituellement (voir par exemple les documents DE4208581, EP1125809, DE19941482), présentent l'inconvénient de ne pas prendre en compte les mouvements de tangage du véhicule qui peuvent intervenir au moment du démarrage du véhicule ou au contraire dans une phase transitoire de freinage et immédiatement avant l'arrêt du véhicule. Les mouvements de tangage qui sont alors ressentis par les passagers peuvent être particulièrement désagréables, notamment dans le cas où le véhicule se trouve dans une pente, qu'il s'agisse d'un démarrage en côte ou d'un démarrage en descente.

Dans le cas particulier d'un véhicule se trouvant dans une pente, l'accélération ou la décélération des roues du véhicule génère en effet une variation de l'effort appliqué perpendiculairement à l'axe de la roue. Cet effet, appelé dans la pratique « effet Brouilhet », est particulièrement important sur les roues arrière dont la suspension présente généralement une géométrie ayant tendance à amplifier ce phénomène qui se traduit par une variation de l'angle de tangage du véhicule.

La présente invention a donc pour objet un procédé de commande de freinage et un dispositif de commande de répartition d'efforts de serrage qui soient capables de résoudre ces inconvénients et de diminuer, voire d'annuler, en phase transitoire, les mouvements de tangage auxquels un véhicule automobile est généralement soumis lors d'une accélération ou d'une décélération des roues.

L'invention a également pour objet un tel dispositif et un tel procédé, particulièrement utilisables lorsque le véhicule se trouve dans une pente, et capables de maintenir sensiblement constant l'angle de tangage.

Le véhicule automobile selon l'invention comporte une unité de traitement et un dispositif de commande de freinage des roues comprenant, pour chaque roue, un actionneur de freinage pilotable, et différents capteurs d'état instantané du véhicule. Le véhicule comprend en outre un moyen de détermination de la valeur instantanée de consigne globale de freinage, des moyens de commande de répartition d'effort capables de répartir et d'adapter transitoirement de façon automatique l'effort de serrage exercé par les actionneurs de freinage respectifs des roues avant et arrière en fonction de la variation de la valeur instantanée de la consigne globale de freinage et d'une information sur l'état instantané du véhicule, fournie par les capteurs d'état précités, selon les cas énoncés dans la revendication 1.

Le véhicule peut avantageusement comprendre en outre un moyen de détermination de la répartition de l'effort de freinage exercé entre les roues avant et les roues arrière du véhicule.

Les capteurs d'état du véhicule comprennent également de préférence un capteur de la commande d'un frein de parking.

Dans un mode de réalisation avantageux, le véhicule comprend encore un dispositif de répartition de freinage assurant la stabilité du véhicule, les moyens de commande de répartition d'effort étant rendus inefficaces en cas de freinage d'urgence.

Le procédé de commande de freinage des roues d'un véhicule automobile de l'invention consiste à commander la répartition des efforts de freinage exercés respectivement sur les roues avant et arrière en fonction de la variation de la valeur instantanée d'une consigne globale de freinage et d'une information sur l'état instantané du véhicule,

en cas de démarrage en côte, en modifiant la répartition des efforts de freinage exercés, pendant une durée transitoire précédant le démarrage et suivant la commande de desserrage des freins, éventuellement du frein de parking, en diminuant l'effort de freinage exercé sur les roues arrière tout en maintenant constant l'effort de freinage exercé sur les roues avant.

Un dispositif selon l'invention pour la commande de répartition des efforts de serrage devant être exercés sur des actionneurs de freinage des roues avant et arrière d'un véhicule automobile comprend un automate de commande capable de recevoir un signal de consigne de freinage, un signal de consigne de répartition de freinage et différents signaux représentatifs de l'état du véhicule. L'automate est capable d'adopter, selon une fréquence d'échantillonnage déterminée, différents états de sortie correspondant respectivement :

- au maintien constant de l'effort exercé sur les roues avant;
- au maintien constant de l'effort exercé sur les roues arrière;
- au transfert progressif de l'effort de freinage exercé, depuis les roues avant vers les roues arrière ;
- au transfert progressif de l'effort de freinage exercé, depuis les roues arrière vers les roues avant ;
- au maintien de la répartition des efforts de freinage selon la consigne de répartition reçue.

L'invention sera mieux comprise à l'étude de la description détaillée suivante, faite à partir des dessins annexés, sur lesquels :

- la figure 1 représente schématiquement un véhicule, selon l'invention, se trouvant sur une pente ;
- la figure 2 illustre schématiquement les forces agissant sur une roue d'un véhicule en l'absence de tout effort tangentiel appliqué sur la roue ;
- la figure 3 est une vue schématique similaire à la figure 2, montrant les forces appliquées sur la même roue lors d'une augmentation de l'effort tangentiel appliqué;
- la figure 4 est une vue schématique analogue aux figures 2 et 3, montrant les efforts appliqués sur une roue lors d'une diminution de l'effort tangentiel appliqué sur la roue ; et
- la figure 5 illustre schématiquement les principaux éléments d'un dispositif mettant en oeuvre l'invention.

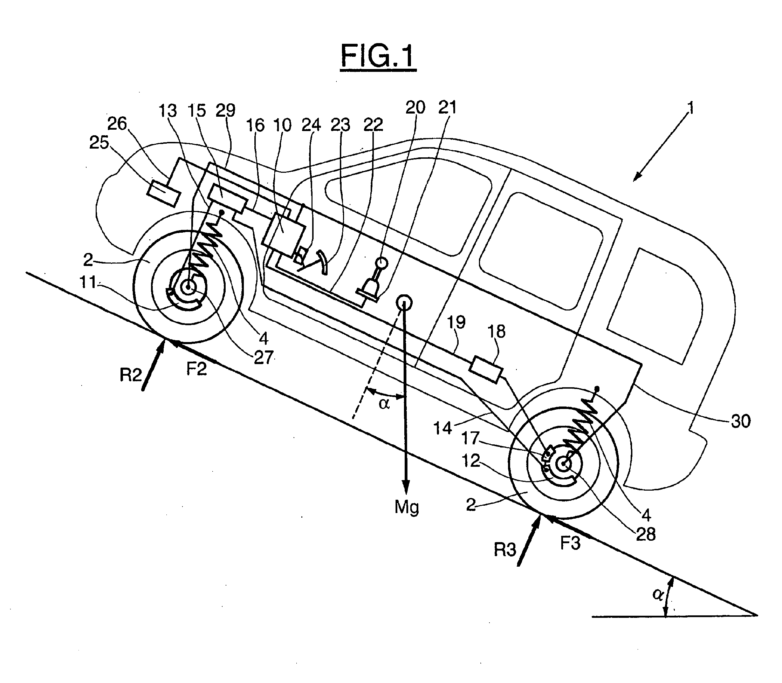

Dans l'exemple illustré sur la figure 1, le véhicule 1 se trouve sur une chaussée inclinée avec une pente d'angle $\alpha$. Les roues avant 2 sont soumises à une force de réaction $R_2$ et à un effort tangentiel $F_2$ dirigé vers l'avant. Les roues arrière 3 sont soumises dans les mêmes conditions à une réaction normale $R_3$ et à un effort tangentiel $F_3$ également dirigé vers l'avant. Les efforts tangentiels $F_2$ et $F_3$ sont dirigés vers l'avant du véhicule en cas d'accélération et vers l'arrière du véhicule en cas de décélération. Ces différentes forces sont capables d'équilibrer le poids du véhicule Mg qui s'exerce verticalement à partir du centre de gravité du véhicule en faisant un angle $\alpha$ par rapport à la normale à la chaussée.

Une variation des efforts tangentiels $F_2$ et $F_3$ génère une variation de l'effort normal appliqué sur les roues par effet « Brouilhet ».

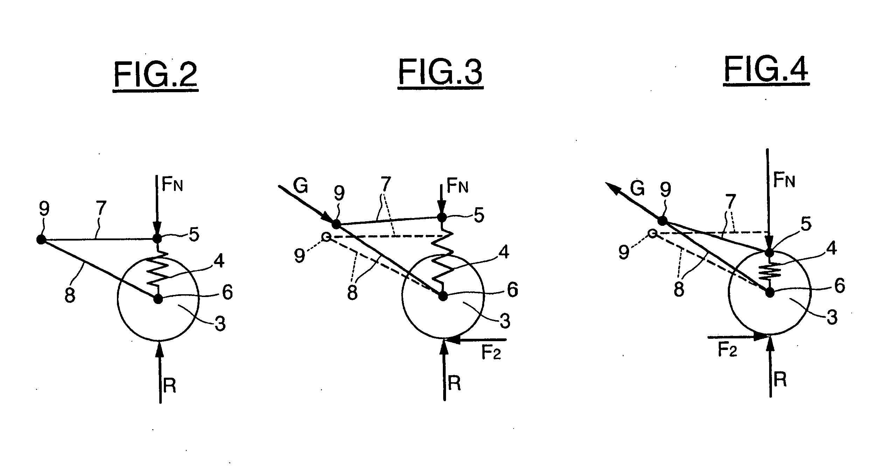

La figure 2 illustre à cet égard schématiquement une roue arrière 3 du véhicule et sa suspension comprenant un amortisseur schématisé sur la figure par un ressort 4. Le ressort 4 est monté entre un point d'ancrage 5 solidaire de la caisse du véhicule et l'axe 6 de la roue 3. Deux bras de suspension 7, 8 sont en outre prévus et reliés entre eux en un point d'articulation 9. Le point d'articulation 9 est situé vers l'avant du véhicule par rapport à la roue arrière 3. Une telle géométrie est représentative d'un train de suspension dit « à bras tirés ».

Lorsqu'aucun effort tangentiel n'est exercé sur la roue 3, la force normale $F_N$ perpendiculaire à la chaussée équilibre la réaction R. Le bras de suspension 7 est essentiellement horizontal.

Lorsqu'un effort tangentiel est exercé sur la roue 3 en direction de l'avant du véhicule, comme illustré sur la figure 3, pendant une phase transitoire d'augmentation de l'effort tangentiel $F_2$, un effort G se trouve appliqué sur les bras de suspension 7, 8 par l'intermédiaire du point d'articulation 9, l'effort G est dirigé vers l'arrière, sensiblement dans l'axe du bras de suspension 8. L'équilibre des forces appliquées sur la roue 3 se trouve ainsi modifié, entraînant une diminution de la force normale d'appui $F_N$. En présence d'une telle force normale plus faible, la suspension s'étire comme on le voit sur la figure 3, la distance entre l'axe 6 de la roue 3 et le point d'ancrage 5 du ressort 4 étant augmentée par rapport à la position qui était celle de la figure 2 et qui est illustrée en tirets sur la figure 3 pour montrer la modification.

Si, à l'inverse, l'effort tangentiel appliqué sur la roue 3 diminue, ce qui revient à appliquer un effort $F_2$ dirigé vers l'arrière, comme illustré sur la figure 4, une force G ayant une orientation inverse de celle de la force G de la figure 3 s'applique sur les bras de suspension 7 et 8 par l'intermédiaire du point d'articulation 9.

L'équilibre des forces sur la roue 3 nécessite alors une augmentation de la force d'appui normale $F_N$, provoquant cette fois un tassement de la suspension 4 avec rapprochement du point d'ancrage 5 par rapport à l'axe 6 de la roue 3. Cette situation représentée sur la figure 4, entraîne donc une modification de position par rapport à la position illustrée sur la figure 2 qui a été reprise en pointillés sur la figure 4.

Ce phénomène appelé « effet Brouilhet », qui apparaît sur chaque roue du véhicule, est particulièrement important sur les roues arrière en raison de la géométrie des trains de suspension arrière. Il se traduit par une variation de l'angle de tangage, le véhicule se tassant à l'arrière lors d'une brusque diminution transitoire de l'effort de freinage appliqué ou, au contraire, se soulevant à l'arrière lors d'une augmentation transitoire de l'effort de freinage appliqué. Le tangage du véhicule qui en résulte, entraîne un inconfort pour les passagers.

La présente invention permet, en agissant sur la répartition des efforts de freinage exercés respectivement sur les roues avant et arrière pendant une phase transitoire, de maîtriser cet effet de tangage, améliorant considérablement le confort du véhicule.

Tel qu'il est illustré sur la figure 1, le véhicule selon l'invention comporte une unité de traitement 10 représentée schématiquement. Sur chaque roue 2, 3 est disposé un actionneur de freinage pilotable 11, 12, qui reçoit un signal de commande par une connexion 13, 14 provenant d'un dispositif de répartition de freinage schématisé par le bloc 15, lui-même connecté à l'unité de traitement 10 par la connexion 16. Les informations de mesure provenant de chaque zone peuvent être traitées afin de déterminer à chaque instant une répartition effective de l'effort de freinage exercé sur chaque roue.

Le freinage du véhicule peut en outre être assuré par un frein de parking 17, agissant dans l'exemple illustré uniquement sur les roues arrière 3 et dont la position ainsi que les mouvements peuvent être détectés par un capteur de frein de parking 18 envoyant par la connexion 19 un signal à l'unité de traitement 10.

Un levier de commande manuel 20 permet au conducteur de définir la marche avant ou la marche arrière ainsi que les différents rapports de transmission. Un capteur 21 associé au levier manuel 20 est capable de transmettre un signal à l'unité de traitement 10 par la connexion 22.

La pédale de frein 23 du véhicule est reliée à un capteur 24 qui peut transmettre un signal à l'unité de traitement 10.

Un capteur de pente 25 est également disposé dans le véhicule 1 afin de détecter la pente $\alpha$ de la chaussée sur laquelle se trouve le véhicule et de fournir un signal à l'unité de traitement 10 par la connexion 26.

Enfin, la vitesse du véhicule est également mesurée à tout instant par des capteurs 27, 28 placés dans les roues 2 et 3 et fournissant à l'unité de traitement 10 des signaux par les connexions 29 et 30.

L'unité de traitement 10 comprend des moyens lui permettant d'adapter la répartition du freinage sur les roues avant 2 et arrière 3 en fonction des informations reçues en provenance des différents capteurs. La répartition ainsi commandée par l'unité de traitement 10 est appliquée sur les actionneurs de freinage 11 et 12.

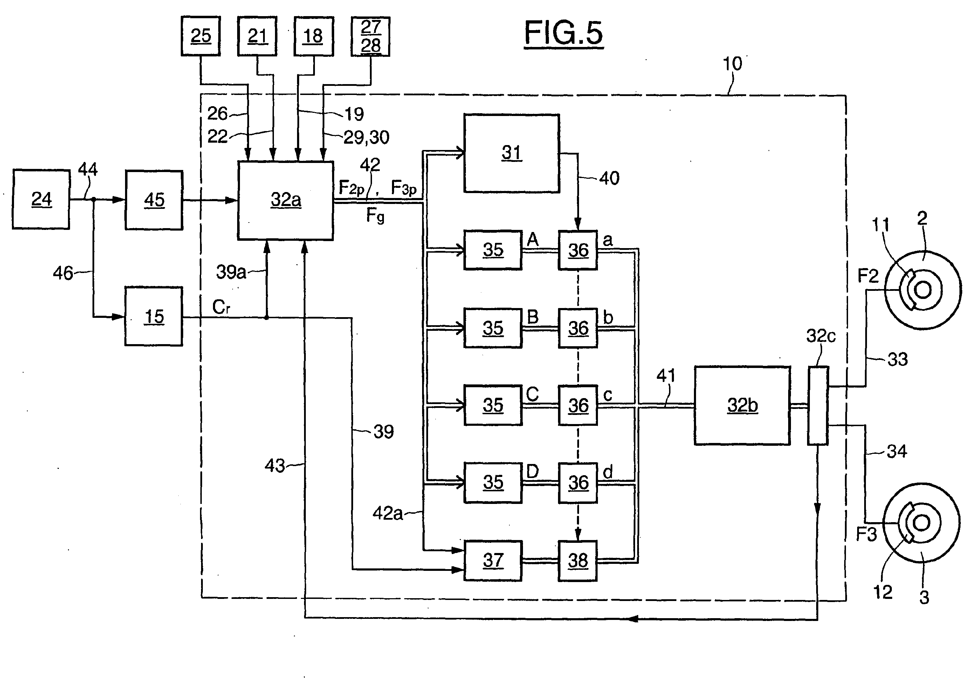

La figure 5 illustre à titre d'exemple un mode de réalisation d'un dispositif de commande de répartition d'efforts de serrage mettant en oeuvre l'invention. On retrouve sur la figure 5 les éléments déjà illustrés sur la figure 1, et en particulier l'unité de traitement 10, le dispositif de répartition d'efforts de freinage 15 et les différents capteurs prévus à titre d'exemple, à savoir le capteur de frein de parking 18, le capteur de la vitesse engagée 21, le capteur de pente 25 et les capteurs de vitesse 27, 28. Les signaux provenant de l'ensemble des capteurs sont amenés sur le bloc interface d'entrée 32a de l'unité de traitement 10.

L'interface d'entrée 32a transforme les signaux reçus en valeurs numériques exploitables par l'automate 31 et les blocs de traitement 35. Cet interface 32a comprend par exemple des convertisseurs analogiques/numériques et des moyens de traitement simples de filtrage et de conversion de signaux.

Le dispositif comprend en outre un automate 31 capable d'adopter différents états de signaux de sortie appliqués sur un bloc interface de sortie 32b, qui transmet directement aux actionneurs de freinage 11 et 12 les signaux correspondant aux efforts de serrage souhaités sur les roues avant 2 et sur les roues arrière 3. A cet effet, l'interface de sortie 32b est relié, par l'intermédiaire d'un bloc 32c, aux actionneurs 11 et 12 par les connexions 33, 34.

Les différents états commandés par l'automate 31 sont schématisés dans l'exemple illustré sur la figure 5 par quatre blocs de traitement 35 reliés à quatre interrupteurs 36. C'est ainsi que le bloc 35 définissant l'état A est associé à l'interrupteur 36 référencé a. De même, l'état B est associé à l'interrupteur b, l'état C est associé à l'interrupteur c et l'état D est associé à l'interrupteur d.

Un bloc de traitement supplémentaire 37 associé à un interrupteur 38 reçoit un signal de commande de répartition de freinage provenant du dispositif électronique de répartition 15 auquel il est relié par la connexion 39.

L'automate 31 est capable en sortie de délivrer par la connexion 40 un signal d'actionnement sur l'un des interrupteurs 36 ou 38, et uniquement sur l'un d'entre eux, de sorte que le signal apparaissant sur la connexion 41 à l'entrée de l'interface de sortie 32b correspond à l'un des états A, B, C ou D, ou encore à l'état correspondant au bloc de traitement 37.

L'automate 31, au même titre que chacun des blocs de traitement 35 correspondant aux états A, B, C et D, reçoivent sur leur entrée les mêmes signaux provenant du bloc d'entrée 32a par la connexion 42.

Le bloc d'entrée 32a reçoit également une information en retour par la connexion 43, représentative des efforts de freinage respectifs appliqués à un instant déterminé sur les actionneurs 11 et 12 des roues avant et arrière. Cette information est véhiculée par un signal émis par le bloc 32c, connecté en sortie du bloc de sortie 32b.

Enfin, la consigne de freinage en provenance du conducteur, mesurée par le capteur 24, est appliquée par la connexion 44 à l'élément 45 relié à l'interface d'entrée 32a, l'ensemble constituant un moyen de détermination de la valeur instantanée de la consigne globale de freinage. La consigne de freinage en provenance du conducteur est également appliquée par la connexion 46 à l'entrée du dispositif de répartition électronique de freinage 15 qui fournit une valeur de consigne de la répartition du freinage entre les roues avant et arrière au bloc de traitement 37.

L'ensemble des forces de serrage appliquées aux roues, constitue la consigne globale de freinage. Cette consigne de freinage provient d'une action du conducteur sur les freins de service et/ou sur le frein de parking qui est enclenché. La consigne de freinage peut également, en variante, provenir d'un dispositif automatique dont le véhicule peut être équipé.

L'unité de traitement 10 assure le calcul de la répartition des efforts de freinage à appliquer à chaque instant à une fréquence d'échantillonnage T.

L'automate 31 et chacun des blocs de traitement 35, reçoivent à l'entrée, la valeur des forces de serrage de l'instant précédent s'exerçant sur les roues avant ($F_{2p}$) et s'exerçant sur les roues arrière ($F_{3p}$). L'automate 31 et les blocs de traitement 35, reçoivent en outre la consigne globale de freinage ($F_g$) déterminée à partir de l'action du conducteur du véhicule.

En sortie de l'unité de traitement 10, les signaux pilotant les actionneurs 11 et 12 correspondent aux efforts de freinage appliqués respectivement sur les roues avant et arrière, $F_2$ et $F_3$ à l'instant donné.

Le bloc 32a recevant par les différents capteurs 18, 21, 25, 27 et 28 des informations sur l'état instantané du véhicule, est capable de détecter la situation dudit véhicule. Il est ainsi capable de détecter si le véhicule se trouve en train d'effectuer un démarrage en côte ou un démarrage en descente. Il est également capable de détecter l'enclenchement ou le désenclenchement du frein de parking, une situation de freinage proche de l'arrêt ou un début de freinage.

Les différents blocs de traitement 35 réalisent des opérations qui correspondent chaque fois à un état de sortie déterminé. Ces opérations sont effectuées itérativement à la fréquence d'échantillonnage et pendant une durée prédéterminée qui correspond à la phase transitoire de tangage du véhicule.

L'état A correspond en sortie aux signaux de commande de freinage :

$$F_2 = F_g - F_{3p}$$

$$F_3 = F_{3p}$$

De cette manière, l'effort de freinage est maintenu constant sur les roues arrière.

L'état B correspond en sortie aux signaux de commande de freinage :

$$F_2 = F_{2p}$$

$$F_3 = F_g - F_{2p}$$

De cette manière, l'effort de serrage sur les roues avant est maintenu constant.

L'état C correspond aux signaux suivants :

$$F_2 = F_g - F_{3p} + C_1$$

$$F_3 = F_{3p} - C_1$$

où $C_1$ est une valeur constante déterminée en fonction de la fréquence d'échantillonnage T de l'unité de traitement 10. L'état C permet de transférer progressivement vers les roues avant la totalité de l'effort de freinage. La vitesse de ce transfert et donc la vitesse de modification de l'angle de tangage du véhicule peut être aisément réglée par un choix approprié de la constante $C_1$.

L'état D correspond aux signaux suivants :

$$F_2 = F_{2p} - C_2$$

$$F_3 = F_g - F_{3p} + C_2$$

où $C_2$ est une valeur constante qui dépend de la fréquence d'échantillonnage T de l'unité de traitement.

L'état D permet ainsi de transférer vers l'arrière progressivement la totalité de l'effort de freinage. La vitesse du transfert dépend de la valeur de la constante $C_2$ qui est donc choisie de façon à obtenir une vitesse de variation de l'angle de tangage appropriée.

La constante $C_2$ peut être égale à la constante $C_1$ ou différente.

Le bloc de traitement 37 a pour objet de maintenir la répartition du freinage égale à la consigne de répartition qu'il reçoit sur son entrée. Il réalise donc les opérations suivantes :

$$F_2 = C_r \times F_g$$

$$F_3 = (1 - C_r) \times F_g$$

où $C_r$ est la consigne de répartition des efforts de freinage déterminée par le répartiteur électronique de freinage 15 et reçue à l'entrée du bloc de traitement 37.

On va maintenant, à titre d'exemple, expliquer le fonctionnement du dispositif dans un certain nombre de situations typiques.

### Démarrage en côte

Avant le démarrage, le véhicule est immobilisé par les freins.

Les efforts de freinage avant le démarrage peuvent être répartis indifféremment sur l'avant ou sur l'arrière. Juste après le démarrage, lorsque le véhicule a décollé, les efforts d'entraînement sont intégralement appliqués sur les roues avant qui tirent le véhicule.

Il en résulte, comme expliqué précédemment, un mouvement de tangage.

Pour minimiser, voire annuler ce mouvement, l'invention prévoit de répartir progressivement, pendant une phase transitoire précédant le démarrage effectif, l'ensemble des efforts de freinage sur les roues avant.

La détection d'une situation de démarrage en côte se fait par un signal émis par le capteur de pente 25 associé à un signal émis par le capteur de vitesse engagé 21. Si la consigne globale de freinage $F_g$ diminue, ce qui correspond à un souhait du conducteur de procéder au démarrage du véhicule, l'automate 31 fournit un signal sur l'interrupteur b, permettant ainsi la sortie du signal correspondant à l'état B. De cette manière, l'effort de freinage initial sur les roues avant est maintenu et la diminution de l'effort de freinage est appliquée intégralement sur les roues arrière jusqu'à annulation complète. La diminution de l'effort de freinage sur les roues avant est ensuite commandée, permettant le démarrage du véhicule.

On notera que si le conducteur exerce au contraire un effort plus important sur les freins, ce qui correspond à une augmentation de la consigne de freinage globale, l'automate 1 commande alors l'action sur l'interrupteur a, autorisant ainsi l'émission du signal correspondant à l'état A qui maintient au contraire l'effort de freinage constant sur les roues arrière et augmente progressivement l'effort de freinage appliqué sur les roues avant.

Si, toujours dans une situation de démarrage en côte, la consigne de freinage reste constante, l'automate 1 agit sur l'interrupteur c, ce qui entraîne le transfert progressif de l'effort de freinage vers les roues avant.

Dans tous les cas, les variations de l'angle de tangage se trouvent ainsi réduites.

## Démarrage en descente

Comme précédemment, le démarrage en descente est détecté par un signal émis par le capteur de pente 25 associé à un signal émis par le capteur 21 de vitesse engagée. Avant le démarrage, le véhicule est immobilisé par les freins selon une consigne globale de freinage correspondant à l'ensemble des forces de freinage appliquées selon la commande du conducteur agissant sur la pédale de frein et/ou sur le frein de parking ou encore en réponse à un dispositif automatique. Les efforts de freinage peuvent initialement être répartis indifféremment sur l'avant ou sur l'arrière. Juste après le démarrage, les efforts de freinage appliqués peuvent être nuls, en cas de démarrage au point mort ou, plus généralement, se situer essentiellement sur les roues avant, ce qui à nouveau risque d'entraîner un mouvement de tangage du véhicule.

Pour éviter ou limiter au maximum ce mouvement de tangage, l'invention prévoit donc de commander une répartition différente fournissant un tangage nul. Le choix de la répartition appropriée dépend de l'angle de pente mesuré par le capteur de pente 25. Une répartition entre les roues arrière et les roues avant $F_3/F_2 = 60/40$, peut par exemple être adoptée. On comprendra bien entendu qu'une autre répartition pourrait être envisagée.

L'action de l'automate 31 dépend alors de la répartition des efforts de freinage effectivement mesurés. Si la répartition mesurée est supérieure à la répartition souhaitée, c'est-à-dire que l'effort de freinage est plus important que souhaité sur les roues arrière et que la consigne de freinage globale diminue, indiquant ainsi le souhait du conducteur de procéder au démarrage, l'automate agit sur l'interrupteur a, de sorte que le signal de sortie correspond à l'effet A. L'effort de freinage $F_3$ existant sur les roues arrière est maintenu constant, tandis que l'effort $F_2$ exercé sur les roues avant diminue.

Ainsi, la valeur de la répartition du freinage entre l'avant et l'arrière diminue et se rapproche de la valeur souhaitée, permettant de maîtriser le tangage du véhicule.

Si, dans la même situation de démarrage en descente, avec une répartition du freinage initial supérieure à la répartition souhaitée, la consigne de freinage augmente, l'automate 31 agit alors sur l'interrupteur b, provoquant un maintien de l'effort de freinage constant sur les roues avant et une diminution de l'effort de freinage sur les roues arrière, ce qui à nouveau permet de diminuer le mouvement de tangage du véhicule.

Toujours dans la même situation de répartition de freinage supérieure à la répartition souhaitée, l'automate 31 agit sur l'interrupteur d lorsque la consigne de freinage est constante. L'effort de freinage est ainsi progressivement transféré vers l'arrière, ramenant la répartition à la valeur souhaitée.

Dans le cas où la répartition des efforts de freinage initial est inférieure à la répartition souhaitée pour diminuer le tangage du véhicule, l'automate 31 agit à l'inverse. Si la consigne de freinage diminue, l'automate 31 agit sur l'interrupteur b, permettant l'émission du signal correspondant à l'état B provoquant le maintien de l'effort de freinage constant sur les roues avant et la diminution progressive de l'effort de freinage exercé sur les roues arrière, entraînant ainsi une augmentation de la répartition du freinage qui revient à la répartition souhaitée, ce qui supprime le mouvement de tangage. Si la consigne de freinage global augmente, l'automate 31 agit sur l'interrupteur a, permettant alors l'émission du signal correspondant à l'état A, maintenant ainsi constant l'effort de freinage exercé sur les roues arrière, en diminuant l'effort de freinage exercé sur les roues avant. Enfin, dans le cas où la répartition de l'effort de freinage correspond à la répartition souhaitée, l'automate 31 agit sur l'interrupteur 38, de sorte que c'est le signal calculé par le bloc de traitement 37 qui est émis, maintenant ainsi la répartition constante.

## Enclenchement du frein de parking

Cette situation est détectée par le capteur 18 de la commande de frein de parking.

Si la consigne globale de freinage augmente, l'automate 31 agit sur l'interrupteur b, entraînant l'émission du signal correspondant à l'état B. Si la consigne globale de freinage diminue, l'automate 31 agit au contraire sur l'interrupteur a, autorisant l'émission du signal correspondant à l'état A. Dans le cas où la consigne de freinage reste constante, l'automate 31 agit sur l'interrupteur d, autorisant l'émission du signal correspondant à l'état D, entraînant ainsi le transfert de l'effort de freinage vers l'arrière.

## Desserrage du frein de parking

Là encore, cette situation est détectée par le capteur 18 de commande de frein de parking. Avant le desserrage du frein de parking, le véhicule est intégralement tenu par les roues arrière. Aucun effort de freinage ne s'exerce sur les roues avant.

Selon l'invention, pour éviter tout mouvement de tangage, il convient, au moment du desserrage du frein de parking, de forcer une répartition des efforts intégralement sur l'arrière. Ensuite, en fonction de la commande du conducteur agissant sur la pédale de frein, il convient de s'orienter vers une répartition appropriée correspondant par exemple à un démarrage en pente, en descente ou en montée. L'action de l'automate 31 se fait donc ici dans les mêmes conditions qu'en cas de démarrage en côte ou de démarrage en descente.

Dans le cas cependant où la consigne de freinage reste constante, l'automate 31 agit sur l'interrupteur d, permettant l'émission du signal correspondant à l'état D, transférant ainsi progressivement la totalité des efforts de freinage sur l'arrière. Puis, selon le signal émis par le capteur de pente 25 et le capteur de vitesse engagée 21, la répartition est modifiée comme dans le cas précédent d'un démarrage en côte ou dans le cas précédent, d'un démarrage en descente.

### Freinage proche de l'arrêt

Lors d'un freinage normal, la répartition des efforts de freinage entre l'avant et l'arrière est constante en fonction de la charge définie par le répartiteur électronique de freinage 15, afin d'assurer la stabilité optimale du freinage.

Dans le cas d'un freinage proche de l'arrêt, les problèmes de stabilité du véhicule ne sont pas réellement critiques et permettent de modifier la répartition de façon à supprimer le tangage du véhicule. Une augmentation de l'effort de freinage exercé sur l'arrière réduit en effet le tangage du véhicule grâce à l'effet Brouilhet.

Si la consigne globale de freinage augmente, l'automate 31 est donc commandé de façon à agir sur l'interrupteur b, autorisant l'émission du signal correspondant à l'état B qui maintient constant l'effort exercé sur les roues avant et entraîne ainsi une augmentation de l'effort exercé sur les roues arrière. Si la consigne de freinage global reste, constante, l'automate 31 agit sur l'interrupteur d entraînant ainsi l'émission du signal correspondant à l'état D qui provoque le transfert progressif vers l'arrière de la totalité de l'effort de freinage. Au cas où la consigne globale de freinage diminue, l'automate 31 agit sur l'interrupteur a, entraînant l'émission du signal correspondant à l'état A qui maintient constant l'effort exercé sur les roues arrière, de sorte que la diminution du freinage s'exerce uniquement sur les roues avant.

### Début de freinage

Au moment du début de freinage, c'est-à-dire au moment d'une augmentation instantanée de la consigne d'effort de freinage global, on constate un effet de tangage résultant d'une oscillation amortie de l'effort normal exercé sur les roues arrière, si la répartition de l'effort entre les roues avant et les roues arrière est fixe.

Selon l'invention, on procèdera donc, pendant une phase transitoire correspondant à la dynamique de tangage du véhicule, à une augmentation de l'effort de freinage sur les roues arrière, de façon à limiter les variations des efforts normaux appliqués sur les roues arrière et à obtenir ainsi une meilleure stabilité et une meilleure efficacité du freinage. En effet, le mouvement de tangage de la caisse du véhicule entraînant une variation des efforts normaux sur les roues arrière, celles-ci se trouvent par moment délestées, ce qui diminue l'efficacité du freinage.

Si la répartition du freinage entre les roues avant et les roues arrière est convenable, c' est-à-dire correspond sensiblement à la consigne de répartition et qu'en outre la consigne de freinage globale augmente, ce qui correspond à une volonté de freinage du conducteur, l'automate 31 agit sur l'interrupteur d, autorisant l'émission du signal correspondant à l'état B, provoquant ainsi le maintien constant de l'effort de freinage appliqué sur les roues avant et l'augmentation de l'effort de freinage appliqué sur les roues arrière. Il en résulte un surfreinage sur les roues arrière qui limite les mouvements de tangage du véhicule.

Dans les mêmes conditions, si la consigne de freinage diminue, l'automate 31 agit sur l'interrupteur c, permettant l'émission du signal correspondant à l'état C, entraînant ainsi un transfert progressif vers l'avant, de sorte que la diminution de l'effort de freinage se fait plus rapidement sur les roues avant que sur les roues arrière, sur lesquelles s'exerce à nouveau un surfreinage diminuant le tangage du véhicule.

Dans le cas où la répartition du freinage entre l'avant et l'arrière est trop faible par rapport à la consigne de répartition, l'automate 31 agit sur l'interrupteur c, permettant l'émission du signal correspondant à l'état C, transférant ainsi vers les roues avant une partie plus importante de l'effort de freinage, de façon à rapprocher la répartition de sa valeur de consigne.

Le surfreinage ainsi produit sur les roues arrière pendant une phase transitoire au début du freinage peut, dans certains cas, entraîner un risque d'instabilité du véhicule. Il est alors possible de commander le retour instantané à la valeur de consigne de la répartition qui assure la stabilité au véhicule.

### Freinage normal

Au cours d'un freinage normal, le dispositif de l'invention permet également d'agir sur la répartition de freinage. Si la répartition instantanée est inférieure à la consigne de répartition, l'automate 31 agit sur l'interrupteur d, permettant l'émission d'un signal correspondant à l'état D, entraînant ainsi un transfert vers l'arrière de l'effort de freinage qui ramène la répartition vers sa valeur de consigne. Si la répartition instantanée est au contraire supérieure à la valeur de consigne, l'automate 31 agit sur l'interrupteur c, permettant l'émission du signal correspondant à l'état C qui entraîne le transfert progressif d'un effort de freinage plus important vers l'avant, ramenant à nouveau la répartition de freinage vers la valeur de consigne.

Si un problème de sécurité est détecté, l'automate 31 commande directement l'interrupteur 38 de façon que le signal de répartition de freinage issu du bloc de traitement 37 correspondant à la répartition calculée par le répartiteur électronique de freinage 15 soit immédiatement transmis aux actionneurs de freinage.

Grâce à la présente invention, il est ainsi possible, dans toutes les situations particulières du véhicule, d'agir transitoirement sur la répartition du freinage de façon à éviter les mouvements de tangage constatés habituellement. On comprendra que l'action ainsi effectuée sur la répartition du freinage se fait uniquement pendant une courte phase transitoire, correspondant à celle pendant laquelle les mouvements de tangage se manifestent habituellement.

## Revendications

1. Véhicule automobile comportant une unité de traitement (10) et un dispositif de commande de freinage des roues comprenant, pour chaque roue, un actionneur de freinage pilotable (11, 12), un dispositif de répartition de freinage (15) capable de répartir l'effort de serrage exercé par les actionneurs de freinage respectifs des roues avant et arrière et différents capteurs d'état instantané du véhicule comprenant notamment un capteur de pente (25) capable de détecter la pente de la chaussée sur laquelle se trouve le véhicule, un capteur du rapport de transmission engagé (21) et/ou un capteur de la vitesse du véhicule (27, 28), avec en outre un moyen (24) de détermination de la valeur instantanée de consigne globale de freinage, comprenant un automate (31) des moyens pour adapter transitoirement la répartition du freinage sur les roues avant et arrière, en fonction de la variation de la valeur instantanée de consigne globale de freinage et des informations sur l'état instantané du véhicule, fournies par les capteurs d'état précités, **caractérisé par le fait que** l'automate (31) est capable d'adopter différents états de signaux de sortie correspondant respectivement :

   - au maintien constant de l'effort exercé sur les roues avant ;
   - au maintien constant de l'effort exercé sur les roues arrière ;
   - au transfert progressif de l'effort de freinage exercé , depuis les roues avant vers les roues arrière ;
   - au transfert progressif de l'effort de freinage exercé , depuis les roues arrière vers les roues avant ;

   - au maintien de la répartition des efforts de freinage selon la consigne de répartition reçue.

2. Véhicule automobile selon la revendication 1 **caractérisé par le fait qu'**il comprend en outre un moyen de détermination de la répartition de l'effort de freinage exercé entre les roues avant et les roues arrière du véhicule.

3. Véhicule automobile selon la revendication 2 **caractérisé par le fait que** les capteurs d'état comprennent un capteur de la commande d'un frein de parking (18).

4. Véhicule automobile selon l'une quelconque des revendications précédentes **caractérisé par le fait qu'**il comprend un dispositif (15) de répartition de freinage assurant la stabilité du véhicule, les moyens de commande de répartition d'effort étant rendus inefficaces en cas de freinage d'urgence.

5. Procédé de commande de freinage des roues d'un véhicule automobile comprenant une commande de répartition des efforts de freinage exercés respectivement sur les roues avant et arrière en fonction d'une information sur l'état instantané du véhicule et tenant compte de la variation de la valeur instantanée d'une consigne globale de freinage, **caractérisé par le fait qu'**en cas de démarrage en côte, on modifie la répartition des efforts de freinage exercés, pendant une durée transitoire précédant le démarrage et suivant la commande de desserrage des freins, éventuellement du frein de parking, en diminuant l' effort de freinage exercé sur les roues arrière tout en maintenant constant l'effort de freinage exercé sur les roues avant.

6. Dispositif de commande de répartition d'efforts de serrage devant être exercés sur des actionneurs de freinage (11, 12) des roues avant et arrière d'un véhicule automobile, comprenant un automate de commande capable de recevoir un signal de consigne de freinage, un signal de consigne de répartition de freinage et différents signaux représentatifs de l'état du véhicule, **caractérisé par le fait que** l'automate est capable d'adopter, selon une fréquence d'échantillonnage déterminée, différents états de sortie correspondant respectivement :

   - au maintien constant de l'effort exercé sur les roues avant ;
   - au maintien constant de l'effort exercé sur les roues arrière ;
   - au transfert progressif de l'effort de freinage exercé , depuis les roues avant vers les roues arrière ;
   - au transfert progressif de l'effort de freinage exercé , depuis les roues arrière vers les roues avant ;
- au maintien de la répartition des efforts de freinage selon la consigne de répartition reçue.

**Claims**

1. Motor vehicle comprising a processing unit (10) and a wheel brake control device comprising, for each wheel, a controllable brake actuator (11, 12), a brake apportioning device (15) capable of apportioning the brake application force exerted by the respective brake actuators of the front and rear wheels, and various sensors that sense the instantaneous status of the vehicle and including, in particular, a gradient sensor (25) capable of detecting the gradient of the roadway upon which the vehicle lies, a transmission ratio sensor (21) and/or a vehicle speed sensor (27, 28) with, in addition, a means (24) of determining the instantaneous overall braking setpoint value, comprising a controller (31) of the means for temporarily adapting the apportioning of the braking to the front and rear wheels according to the variation in the instantaneous overall braking setpoint value and information regarding the instantaneous status of the vehicle which information is supplied by the aforementioned status sensors, **characterized in that** the controller (31) is capable of adopting various output signal statuses corresponding respectively:

   - to keeping the force exerted on the front wheels constant;
   - to keeping the force exerted on the rear wheels constant;
   - to the progressive transfer of the braking force exerted from the front wheels to the rear wheels;
   - to the progressive transfer of the braking force exerted from the rear wheels to the front wheels;
   - to keeping the apportioning of the braking forces in accordance with the apportioning setpoint value received.

2. Motor vehicle according to Claim 1, **characterized in that** it further comprises a means of determining the apportioning of the exerted braking force between the front wheels and the rear wheels of the vehicle.

3. Motor vehicle according to Claim 2, **characterized in that** the status sensors comprise a sensor sensing operation of a parking brake (18).

4. Motor vehicle according to any one of the preceding claims, **characterized in that** it comprises a brake apportioning device (15) that ensures vehicle stability, the force apportioning control means being rendered ineffectual under emergency braking situations.

5. Method for controlling the braking of the wheels of a motor vehicle comprising control of the apportioning of braking forces exerted on the front and rear wheels respectively according to information regarding the instantaneous status of the vehicle and taking account of the variation in the instantaneous value of an overall braking setpoint value, **characterized in that**, during uphill hill starts, the apportioning of the exerted braking forces is altered for a temporary period of time preceding the start and according to the command to release the brakes, possibly the parking brake, thereby reducing the braking force applied to the rear wheels while keeping the braking force applied to the front wheels constant.

6. Device for controlling the apportioning of braking forces to be exerted on brake actuators (11, 12) for the front and rear wheels of a motor vehicle, comprising a controller capable of receiving a braking setpoint signal, a brake apportioning setpoint signal and various signals representative of the status of the vehicle, **characterized in that** the controller is capable, with a determined sampling frequency, of adopting various output statuses corresponding respectively:

   - to keeping the force exerted on the front wheels constant;
   - to keeping the force exerted on the rear wheels constant;
   - to progressively transferring the exerted braking force from the front wheels to the rear wheels;
   - to progressively transferring the exerted braking force from the rear wheels to the front wheels;
   - to keeping the apportioning of the braking forces in accordance with the apportioning setpoint received.

**Patentansprüche**

1. Kraftfahrzeug, umfassend eine Verarbeitungseinheit (10) und eine Radbremssteuervorrichtung umfassend für jedes Rad einen ansteuerbaren Bremssteller (11, 12), eine Bremsverteilungsvorrichtung (15), die in der Lage ist, die Klemmkraft zu verteilen, die von den jeweiligen Bremsstellern der Vorder-und Hinterräder ausgeübt wird, und verschiedene Momentanzustandssensoren des Fahrzeugs, zu denen insbesondere ein Neigungssensor (25), der in der Lage ist, die Neigung der Fahrbahn zu erfassen, auf der sich das Fahrzeug befindet, ein Sensor des eingeschalteten Übersetzungsverhältnisses (21) und/ oder ein Fahrzeuggeschwindigkeitssensor (27, 28) gehören, und außerdem mit einem Mittel (24) zur Bestimmung des momentanen Gesamtbremssollwertes, umfassend eine Automatik (31) der Mittel zur vorübergehenden Anpassung der Bremsverteilung auf die Vorder- und Hinterräder, je nach der Änderung des momentanen Gesamtbremssollwertes und den Informationen über den Momentanzustand des Fahrzeugs, die von den oben genannten Zustandssensoren geliefert werden, **dadurch gekennzeichnet, dass** die Automatik (31) in der Lage ist, verschiedene Ausgangssignalzustände einzunehmen, entsprechend jeweils:

- der Konstanthaltung der auf die Vorderräder ausgeübten Kraft;
- der Konstanthaltung der auf die Hinterräder ausgeübten Kraft;
- der progressiven Übertragung der ausgeübten Bremskraft von den Vorderrädern auf die Hinterräder;
- der progressiven Übertragung der ausgeübten Bremskraft von den Hinterrädern auf die Vorderräder;
- der Aufrechterhaltung der Bremskraftverteilung je nach dem empfangenen Verteilungssollwert.

2. Kraftfahrzeug nach Anspruch 1, **dadurch gekennzeichnet, dass** es außerdem ein Mittel zur Bestimmung der Verteilung der zwischen den Vorderrädern und den Hinterrädern des Fahrzeugs ausgeübten Bremskraft umfasst.

3. Kraftfahrzeug nach Anspruch 2, **dadurch gekennzeichnet, dass** die Zustandssensoren einen Sensor der Steuerung einer Handbremse (18) umfassen.

4. Kraftfahrzeug nach einem der vorhergehenden Ansprüche, **dadurch gekennzeichnet, dass** es eine Vorrichtung (15) zur Bremsverteilung umfasst, welche die Stabilität des Fahrzeugs sicherstellt, wobei die Mittel zur Steuerung der Kraftverteilung bei einer Notbremsung unwirksam gemacht werden.

5. Verfahren zur Bremssteuerung der Räder eines Kraftfahrzeugs, umfassend eine Steuerung zur Verteilung der Bremskräfte, die jeweils auf die Vorder- und Hinterräder ausgeübt werden, je nach einer Information über den momentanen Zustand des Fahrzeugs und unter Berücksichtigung der Veränderung des momentanen Werts eines Gesamtbremssollwertes, **dadurch gekennzeichnet, dass** bei einer Berganfahrt die Verteilung der ausgeübten Bremskräfte während einer Übergangsdauer vor dem Anfahren und nach dem Befehl zum Lösen der Bremsen, gegebenenfalls der Handbremse, geändert wird, indem die auf die Hinterräder ausgeübte Bremskraft verringert wird und dabei die auf die Vorderräder ausgeübte Bremskraft konstant gehalten wird.

6. Steuervorrichtung zur Verteilung der Klemmkräfte, die auf die Bremssteller (11, 12) der Vorder- und Hinterräder eines Kraftfahrzeugs auszuüben sind, umfassend eine Steuerautomatik, die in der Lage ist, ein Bremssollwertsignal, ein Bremsverteilungssollwertsignal und verschiedene Signale, die den Zustand des Fahrzeugs darstellen, zu empfangen, **dadurch gekennzeichnet, dass** die Automatik in der Lage ist, je nach einer bestimmten Abtastrate verschiedene Ausgangszustände einzunehmen, jeweils entsprechend:

- der Konstanthaltung der auf die Vorderräder ausgeübten Kraft;
- der Konstanthaltung der auf die Hinterräder ausgeübten Kraft;
- der progressiven Übertragung der ausgeübten Bremskraft von den Vorderrädern auf die Hinterräder;
- der progressiven Übertragung der ausgeübten Bremskraft von den Hinterrädern auf die Vorderräder;
- der Aufrechterhaltung der Bremskraftverteilung je nach dem empfangenen Verteilungssollwert.

## FIG.1

# FIG.2

# FIG.3

# FIG.4

EP 1 388 475 B1

FIG.5

**EP 1 388 475 B1**

## RÉFÉRENCES CITÉES DANS LA DESCRIPTION

**Documents brevets cités dans la description**

- DE 4208581
- EP 1125809 A
- DE 19941482